# EUROPÄISCHE PATENTSCHRIFT

(11) **EP 2 293 981 B1**
(45) Veröffentlichungstag und Bekanntmachung des Hinweises auf die Patenterteilung: **30.05.2012**
(21) Anmeldenummer: 09761785.6
(22) Anmeldetag: 12.06.2009
(51) Int. Cl.: B64D 13/00

(54) **AUTONOMER, SICH IN LÄNGSRICHTUNG ERSTRECKENDER O2 KANAL**
AUTONOMOUS O2 CHANNEL EXTENDING IN THE LONGITUDINAL DIRECTION
CANAL D'OXYGENE AUTONOME S'ETENDANT DANS LE SENS LONGITUDINAL

(30) Priorität: 13.06.2008 DE 102008028258; 13.06.2008 US 131930
(43) Veröffentlichungstag der Anmeldung: 16.03.2011
(73) Patentinhaber: Airbus Operations GmbH, 21129 Hamburg (DE)
(72) Erfinder: SCHNEIDER, Uwe, 21635 Jork Königreich (DE); WAHLE, Quirin, 80634 München (DE); KNAAK, Simon, 21129 Hamburg (DE); VOGT, Thomas, 22547 Hamburg (DE)
(74) Vertreter: Maiwald Patentanwalts GmbH
(86) Internationale Anmeldenummer: PCT/EP2009/057279
(87) Internationale Veröffentlichungsnummer: WO 2009/150223

(56) Entgegenhaltungen:
- EP-A- 0 394 076
- US-A- 3 503 394
- US-A- 3 981 300

## Beschreibung

### BEZUG AUF ZUGEHÖRIGE ANMELDUNGEN

Die vorliegende Anmeldung beansprucht die Priorität der US Provisional Patentanmeldung Nr. 61/131,930, eingereicht am 13. Juni 2008 und der deutschen Patentanmeldung Nr. 10 2008 028 258.8, eingereicht am 13. Juni 2008.

### GEBIET DER ERFINDUNG

Die vorliegende Erfindung befasst sich mit einem System zur Sauerstoffversorgung von Personen in einem Luftfahrzeug.

### HINTERGRUND DER ERFINDUNG

Sauerstoffsysteme werden in Luftfahrzeugen zum Beispiel vorgehalten, falls die zentrale Bedruckung der Kabine ausfällt, die in der Regel den bei steigender Flughöhe erforderlichen Druckausgleich und die damit verbundene Sauerstoffversorgung der Passagiere regelt. Bei Großraumflugzeugen sind beispielsweise Sauerstoffversorgungseinheiten als quaderförmige Behälter vorgesehen. Diese Behälter sind meist in den Passagierversorgungskanal PSC integriert. Dabei kommen zwei unterschiedliche Sauerstoffsysteme zum Einsatz: Chemische Systeme und Systeme mit zentraler Sauerstoffflasche. Je nach System ergeben sich unterschiedliche flugzeugseitige Vorbereitungen. In der Regel sind die Sauerstoffboxen autonome Bauteile, die einzeln angesteuert werden. Es hat sich jedoch gezeigt, dass die Anordnung der Sauerstoffboxen für jedes Flugzeuglayout bezüglich der Sitzpositionen individuell erfolgen muss, was wiederum Auswirkungen auf die gesamte PSC-Bestückung hat, zum Beispiel in Bezug auf Variantenvielfalt, Interface- und Spaltkonzepte. Die Sauerstoffboxen, die in den PSC integriert eingebaut werden, müssen bei jeder Rekonfiguration, d.h. bei jeder Änderung des Kabinenlayouts, mit verschoben werden. Da es sich um sicherheitsrelevante Teile handelt, muss bei jeder Verschiebung auch jedes Mal ein neuer Test durchgeführt werden. Dokument US3503394, welche alle Merkmale des Oberbegriffs des Anspruchs 1 aufweist, wird als nächstliegender Stand der Technik angesehen.

### ZUSAMMENFASSUNG DER ERFINDUNG

Eine Aufgabe der vorliegenden Erfindung besteht daher darin, ein einfacheres System zur Sauerstoffversorgung zur Verfügung zu stellen.

Erfindungsgemäß wird diese Aufgabe durch ein System nach Anspruch 1 gelöst. Beispielhafte Ausführungsformen sind in den abhängigen Unteransprüchen beschrieben.

In einer beispielhaften Ausführungsform ist vorgesehen, dass das System wenigstens eine Sauerstoffleitung, eine Sauerstoffzuführung und mehreren Anschlussstellen für Sauerstoffmasken aufweist, wobei sich die Sauerstoffleitung in einer Längsrichtung erstreckt und die Anschlussstellen mit der Sauerstoffleitung verbunden sind.

Durch die lineare Erstreckung der Sauerstoffleitung ergibt sich ein möglichst einfaches Bauteil, was Vorteile nicht nur hinsichtlich der Herstellungskosten, sondern auch Einsparungen beim Gewicht bedeutet, was einen zentralen Aspekt im Bereich von Luftfahrzeugen darstellt. Aufgrund der Verbindung der Anschlussstellen mit der Sauerstoffleitung ist die Zahl der notwendigen Komponenten reduziert.

Die Anschlussstellen sind linear angeordnet.

Dies erlaubt die Ausbildung von möglichst einfachen Anschlussstellen. Insbesondere lassen sich entlang der Sauerstoffleitung eine Vielzahl von Anschlussstellen anordnen, ohne dass zusätzliche separate Verteiler- oder Zwischenstücke erforderlich sind, wie dies üblicherweise der Fall ist. Die Anschlussstellen sind direkt an der Sauerstoffleitung oder der Sauerstoff führenden Vorrichtung angeschlossen. Die Anschlussstellen können dabei beispielsweise auch gebündelt angeordnet werden. Dabei ist es beispielsweise möglich, die Anschlussstellen als Gruppen von Anschlussstellen zusammenzufassen. Über die Länge der Sauerstoffleitung können dann mehrere solcher Gruppen angeordnet sein, wobei auch Gruppen von Anschlussstellen und einzelne Anschlussstellen miteinander kombiniert werden können. Durch die Bildung von Gruppen lässt sich eine Vielzahl von Anschlussstellen vorsehen, wobei durch die Bündelung die dazwischen liegenden Bereiche der Sauerstoffleitung einfacher ausgebildet werden können. Beispielsweise ist es möglich, die Anschlussstellen in einem Bauelement anzuordnen, wobei dann bei der Produktion der Sauerstoffleitung z.B. entsprechend mehrere Bauelemente abwechselnd mit entsprechend einfachen Leitungselementen zu einem Bauteil zusammengesetzt werden können.

Die Anschlussstellen sind in Längsrichtung voneinander beabstandet und hintereinander angeordnet.

Dadurch lässt sich beispielsweise eine gleichmäßige Verteilung der Anschlussstellen entlang der Sauerstoffleitung erreichen, um eine gleichmäßige Abdeckung mit Sauerstoffmasken zu ermöglichen. Dabei können beispielsweise auch die erwähnten Gruppen von Anschlussstellen beabstandet und hintereinander angeordnet sein

Die Anschlussstellen sind linear angeordnet sowie in Längsrichtung voneinander beabstandet und hintereinander angeordnet.

Dies ergibt möglichst einfache und stets gleiche Anschlusssituationen für zum Beispiel die Sauerstoffmasken. Wenn die Anschlussstellen beispielsweise in einem gleichmäßigen Rasterabstand angeordnet sind, bedeutet dies auch, dass die Befestigung der Sauerstoffleitung auf dieses Raster abgestimmt werden kann, d.h. dass an den Befestigungspunkten jeweils die gleichen geometrischen und konstruktiven Bedingungen vorliegen. Das Raster kann dabei auch auf die übergeordneten Rasterabstände einer tragenden Struktur abgestellt werden. Bei einem stets gleichen Abstand der Anschlussstellen ist die Herstellung und Handhabung dahingehend vereinfacht, dass bei einer linearen Herstellung der Sauerstoffleitung als Halbzeug kein unnötiger Verschnitt entsteht. Die Merkmale beziehen sich sowohl auf einzelne Anschlussstellen als auch auf Gruppen von Anschlussstellen, wobei auch innerhalb der Gruppen die Merkmale vorliegen können, was jedoch nicht zwingend ist. Es können beispielsweise auch Gruppen von linear und/oder hintereinander angeordneten Anschlussstellen ausgebildet sein, wobei die Gruppen untereinander in Längsrichtung voneinander beabstandet sein können.

In einer weiteren beispielhaften Ausführungsfonn ist vorgesehen, dass an einer Vielzahl der Anschlussstellen Sauerstoffmasken lösbar mit der Sauerstoffleitung verbunden sind.

Die lösbare Verbindung erlaubt eine einfache Installation der Sauerstoffmasken. Vorzugsweise lassen sich deren lose Anschlussschlauchenden einfach über einen an der Sauerstoff führenden Leitung befindlichen Nippel schieben. Der Nippel kann dabei zum Beispiel Bestandteil einer Ventilvorrichtung sein, die in die Sauerstoffleitung integriert ist. Gleichzeitig lassen sich auch die üblicherweise eingesetzten Verschlüsse integrieren, die sich erst bei einem kräftigen Zug an der Sauerstoffmaske öffnen, so dass nur dann Sauerstoff ausströmt, wenn dies auch gewollt ist. Dazu hängen die Masken an Schläuchen heraus. Die Schläuche sind lang genug, um die Masken greifen zu können, oder es sind Zugfahnen vorgesehen, um die Maske zu erreichen. Für den Einsatz vor dem Mund und der Nase muss jedoch auch ein großer Passagier an der Maske oder der Zugfahne ziehen, wodurch sich der Verschluss öffnet, ein weiteres Stück Schlauch frei gegeben wird und der Sauerstoff ausströmt.

In einer weiteren beispielhaften Ausführungsform ist ein Gehäuse vorgesehen, das mehrere Aufnahmefächer für jeweils mehrere Sauerstoffmasken aufweist, und die Aufnahmefächer weisen jeweils eine Verschlussklappe auf, die derart öffenbar ist, dass das Aufnahmefach in geöffnetem Zustand nach unten offen ist und die darin aufnehmbaren Sauerstoffmasken herausfallen können.

Bei einer zentralen Ansteuerung der Verschlussklappen lassen sich so die Sauserstoffmasken den Passagieren einfach zur Verfügung stellen. Selbstverständlich ist auch ein separates Ansteuern der Verschlussklappen möglich. Bei Nichtbenutzung sind die Masken in dem Aufnahmefach sicher verstaut und können nicht abhanden kommen. Die Größe der Aufnahmefächer ist auf eine einfache Handhabung bei der Verstauung der mehreren Masken in dem Fach ausgerichtet. Da eine Klappe mehrere Masken abdeckt, ist zudem die Anzahl der beweglichen Teile und Verschlussmechanismen reduziert. Wenn die Anzahl der Masken pro Klappe relativ gering ist, bedeutet dies auch nur den Ausfall einer geringen Anzahl an Masken bei einer defekten Klappe. Selbstverständlich können die Klappen auch über mehrere Fächer reichen.

In einer weiteren beispielhaften Ausführungsform weist die Sauerstoffleitung einen druckbeaufschlagten Hochdruckkanal und einen Niederdruckkanal auf.

Dies erlaubt eine zentrale Versorgung mit den unterschiedlichen Systemen, d.h. chemische Systeme oder zentrale Systeme. Je nach Druck der verwendeten Systeme erfolgt eine Druckreduzierung zwischen dem Hochdruckkanal und dem Niederdruckkanal, um einen für die Anschlussstellen und die Masken geeigneten Druck zu erhalten. Die Verbindung zwischen dem Hochdruckkanal und dem Niederdruckkanal erfolgt über Verbindungsöffnungen. Die Anschlussstellen der Masken können dann vorzugsweise direkt an dem Niederdruckkanal vorgesehen sein, wobei hier eventuell notwendige Ventile integriert ausgebildet sein können. Die Verbindungsöffnungen reduzieren den Druck des Hochdruckkanals auf ein für die Masken und die Anschlussstellen geeignetes Maß.

In einer weiteren beispielhaften Ausführungsform ist wenigstens eine Sauerstoffquelle in dem Hochdruckkanal angeordnet ist.

Bei der Sauerstoffquelle handelt es sich zum Beispiel um eine oder mehrere Sauerstoffflaschen oder um ein oder mehrere chemische Systeme, bei denen durch den Vorgang einer chemischen Reaktion Sauerstoff erzeugt bzw. freigesetzt wird und damit zur Verfügung gestellt wird. Der Hochdruckkanal ist dafür so dimensioniert, dass er beispielsweise Sauerstoffflaschen oder chemischen Systeme, bzw. die Container der chemischen Systeme, aufnehmen kann. Dabei können mehrere kleinere Systeme, wenige größere Systeme, bzw. Sauerstoffquellen, oder sogar nur ein einzelnes großes System, bzw. Sauerstoffquelle, zur Anwendung kommen. Durch das Vorsehen der wenigstens einen Sauerstoffquelle innerhalb der Hochdruckkanals ist es möglich, auf eine separate Sauerstoffzuführung zu verzichten, was wiederum eine Verringerung des Platzbedarfs und eine Verringerung des Installationsaufwands bedeutet. Als Sauerstoffquelle kommen mehrere einzelne Sauerstoffquellen ebenso in Frage wie eine sich auf einen Großteil der Länge der eigentlichen Sauerstoffleitung, bzw. des Hochdruckkanals, erstreckende Sauerstoffquelle. Bei Bedarf wird der Sauerstoff von der Sauerstoffquelle in dem Hochdruckkanal freigesetzt und dann über den Niederdruckkanal an die Masken weitergeleitet. Die Druckregulierung über die Verbindungsstellen zwischen Hochdruck- und Niederdruckkanal erlaubt eine Anpassung an die unterschiedlichen Sauerstoffquellen, d.h. je nach Sauerstoffquelle und dem von dieser erzeugten Druck können die Anschlussstellen unterschiedlich ausgebildet sein. Wenn als Sauerstoffquelle längliche Behälter verwendet werden, deren Aussendruchmesser mit dem Innendurchmesser des Hochdruckkanals korrespondiert, ist es ferner möglich, die Gehäuse bzw. Behälter der Sauerstoffquelle oder der mehreren Sauerstoffquellen als tragendes Element, bzw. als tragende Elemente, zu verwenden, d.h. der Hochdruckkanal kann durch die Sauerstoffquellen zusätzlich stabilisiert werden und damit weiter spannen, d.h. an weniger Stellen an der tragenden Struktur des Luftfahrzeugs befestigt sein, und/oder mit weniger Material, d.h. leichter und kostengünstiger, ausgebildet sein.

In einer weiteren beispielhaften Ausführungsform ist der Niederdruckkanal segmentiert ausgebildet und mit dem Hochdruckkanal sequentiell verbunden und die Anschlussstellen für die Sauerstoffmasken sind an dem Niederdruckkanal vorgesehen.

Die sequentielle Verbindung mit der druckbeaufschlagten Sauerstoffleitung hat den Vorteil, dass damit eine bessere Anpassung an den für die Masken geeigneten Druck und eine gleichmäßigere Sauerstoffversorgung möglich ist. Die segmentierte Ausbildung erlaubt zudem eine einfache Herstellung und Montage, z. B. durch Aneinandersetzen einzelner Spritzguss- oder Strangpressteile.

In einer weiteren beispielhaften Ausführungsform sind der Hochdruckkanal und der Niederdruckkanal in das Gehäuse integriert und das Gehäuse weist Befestigungsvorrichtungen zur Montage an tragenden Elementen des Luftfahrzeugs auf.

Dies erlaubt eine möglichst platzsparende Ausführung und zum Beispiel auch eine einstückige Herstellung, beispielsweise durch Strangpressverfahren. Außerdem wird durch die Reduzierung der Anzahl der Bauteile auch die Montage vereinfacht. Auch die Installationszeit wird reduziert. Außerdem wird die Anzahl der Schnittstellen reduziert. Durch die Befestigungsvorrichtungen an dem Gehäuse sind keine separaten Rohrschellen oder ähnliches erforderlich. Der geschlossene Sauerstoffkanal wird beispielsweise direkt an den Spanten (lateral) oder an einer von den Ablagevorrichtungen unabhängigen Hilfsstruktur (zentral) befestigt. Die von den anderen Einbauten unabhängige Konstruktion des erfindungsgemäßen Systems erlaubt eine Entkopplung der Bauteile mit einem unterschiedlichen DAL-Level (Design Assurance Level), d.h. Bauteile mit unterschiedlichen Sicherheitsanforderungen werden getrennt eingebaut. Die Montage erfolgt dabei unabhängig von dem Einbau der Hatracks, vorzugsweise zeitlich vor dem Einbau der Hatracks. Die Erreichbarkeit des Sauerstoffsystems ist unabhängig vom Bestuhlungs-Layout gewährleistet. Insgesamt wird eine deutliche Kosteneinsparung erreicht. Die längsgerichtete Ausbildung erlaubt auch eine visuelle Kennzeichnung der verbesserten Sicherheitseinrichtung. Zum Beispiel ist es möglich, den Kanal durch Farbgebung hervorzurufen, um die Passagiere auf diese neue Technik hinzuweisen. Eine derartige Hervorhebung, die auch Safety-Branding genannt wird, ist beispielsweise aus dem Automobilbau bekannt, wo Airbags gekennzeichnet werden.

In einer weiteren beispielhaften Ausführungsform ist vorgesehen, dass in einem Luftfahrzeug wenigstens eine Sauerstoffleitung in Längsrichtung des Luftfahrzeugs verläuft, wobei die Sauerstoffleitung oberhalb von Sitzvorrichtungen für Passagiere oder Crewmitglieder angeordnet ist.

Durch die Ausbildung oberhalb der Sitzvorrichtungen können die Sauerstoffmasken direkt in den Greifbereich der Passagiere fallen. Je nach Anordnung der Passagiere in Querrichtung können auch mehrere längs verlaufende Leitungen vorgesehen sein. Quer verlaufende Stichleitungen sind dann in keinem Fall erforderlich.

In einer weiteren beispielhaften Ausführungsform ist vorgesehen, dass das Luftfahrzeug eine Anzahl von Bestuhlungsbereichen aufweist, die durch in Längsrichtung verlaufende Gangbereiche voneinander getrennt sind, und über jedem Bestuhlungsbereich ist wenigstens eine in Längsrichtung verlaufende Sauerstoffleitung angeordnet.

Damit ist gewährleistet, dass im Notfall jeder Passagier von seinem Sitz aus eine Maske greifen kann. Die Anordnung parallel zur Flugzeuglängsachse ergibt einen möglichst geringen Eingriff in den für die Einbauten vorhandenen Raum oberhalb der Passagiere. Zum Beispiel zeichnen sich Ablagefächer, so genannte Hatracks, ebenfalls durch eine längsgerichtete Ausbildung aus. Durch die Längsrichtung der Sauerstoffleitung wird der Raum für die Hatracks nicht oder nur unwesentlich eingeschränkt.

In einer weiteren beispielhaften Ausführungsform ist vorgesehen, dass mehr Anschlussstellen vorgesehen sind als die maximale Zahl der Sitzvorrichtungen und die Anschlussstellen sind so voneinander beabstandet, dass bei beliebiger Bestuhlung jeder Sitzvorrichtungen die behördlich geforderte Maskenzahl zuordenbar ist, d.h. eine Sauerstoffmaske ist zuordenbar und die entsprechenden gesetzlichen Vorschriften zu ihrer Erreichbarkeit sind erfüllt.

Damit ist prinzipiell gewährleistet, dass die gesetzlich erforderliche Redundanz zur Verfügung gestellt werden kann, d.h. pro Passagier befindet sich eine Maske an Bord plus mindestens 10 % zusätzliche Masken. Der genannte Abstand ermöglicht ein Greifen der Maske auch für kleine Passagiere. Die Auslegung auf die maximale Bestuhlung bedeutet zwar ein Vorhalten überflüssiger Masken für eine lockerere Bestuhlung. Jedoch werden keine schweren Geräte vorgehalten, sondern im Prinzip nur zusätzliche Masken aus Kunststoff und die zusätzlichen Anschlussstellen. Diese fallen jedoch kaum ins Gewicht. Auch die Kosten für die Redundanz sind auf ein Minimum reduziert, vor allem dann, wenn man die Einsparungen bei Retrofitting-Maßnahmen berücksichtigt.

In einer weiteren beispielhaften Ausführungsform ist vorgesehen, dass oberhalb der Sitzvorrichtungen Einbauten angeordnet sind und dass die wenigstens eine Sauerstoffleitung und die mehreren Anschlussstellen für die Sauerstoffmasken in die Einbauten integriert sind.

Bei den Einbauten kann es sich beispielsweise um Ablagefächer für das Handgepäck, d.h. Hatracks handeln. Die Integration erlaubt eine vereinfachte Montage. Außerdem lässt sich das erfindungsgemäße System dadurch gut an unterschiedliche Kabinengestaltungen anpassen. Beispielsweise kann der Kanal in Hatracklänge in das Hatrackmodul integriert werden. Durch die Integration des Systems in beispielsweise die Hatracks kann auch eine Vormontage außerhalb der Flugzeugkabine erfolgen, was eine Optimierung des Montagevorgangs ermöglicht. Weiter können die Einbauten z.B. auch mit speziellen Befestigungsvorrichtungen ausgebildet werden, so dass sich das System leichter an den Einbauten befestigen lässt, sowohl bei der Vormontage als auch bei der Montage in der Kabine.

In einer weiteren beispielhaften Ausführungsform ist vorgesehen, dass die Anschlussstellen mit Sauerstoffmasken in Abhängigkeit der Bestuhlung mit einer festgelegten Überkapazität bestückbar sind.

Dies ist notwendig, um den nie ganz auszuschließenden Ausfall einzelner Masken zu kompensieren. Die Bestückung erfolgt dann so, dass nur die geforderte Redundanz vorliegt und keine überflüssigen Masken installiert sind. Da es sich bei der Bestückung um einen einfachen Anschlussvorgang, zum Beispiel ein Einstöpseln oder Aufschieben eines Schlauchendes auf einen Nippel, handelt, kann die Anpassung einfach und kostengünstig erfolgen. Außerdem bietet das Anpassen durch die Bestückung den Vorteil, dass keine erneute sicherheitstechnische Abnahme des Systems erforderlich ist, wenn das Luftfahrzeug mit einer anderen Bestuhlung ausgestattet worden ist.

In einer weiteren beispielhaften Ausführungsform ist ein Luftfahrzeug mit einem System zur Sauerstoffversorgung nach einer der vorstehend beschriebenen beispielhaften Ausführungsformen vorgesehen.

Die Aufgabe wird auch durch die Verwendung eines Systems zur Sauerstoffversorgung nach einer der vorstehend genannten Ausführungsformen in einem Luftfahrzeug gelöst.

Das erfindungsgemäße System eignet sich alternativ für mehrere Systeme, beispielsweise für die Verwendung als zentrales Sauerstoffsystem mit einer zentralen Sauerstoffflasche im Frachtraum Die zentrale Sauerstoffflasche ist über eine Verbindungsleitung mit dem System, d.h. dem druckbeaufschlagten Sauerstoffkanal verbunden. Die Maskenfächer werden nach Bedarf oder Layout bestückt. Im Auslösefall öffnen die Verschlussklappen über einen zentralen Riegel, d.h. es ist nur eine separate DAL B Verkabelung pro Kanal erforderlich. Im Auslösefall wird der Sauerstoff-Kanal sofort von der zentralen Sauerstoffflasche druckbeaufschlagt. Jede Maske, die gegriffen und gezogen wird, wird über den druckbeaufschlagten 02-Kanal versorgt.

Daneben eignet sich das System auch für die Verwendung als teilzentrales Sauerstoffsystem mit überlangem Sauerstoff-Hochdruckbehälter, anstatt des druckbeaufschlagten 02-Kanals. Alternativ kann auch ein überlanger 02-Reaktor zum Einsatz kommen. Die Maskenfächer sind auch hier nach Bedarf oder Layout bestückt. Im Auslösefall öffnen die Verschlussklappen über einen zentralen Riegel, d.h. auch hier liegt nur eine separate DAL B Verkabelung pro Kanal vor. Im Auslösefall wird der separate Niederdruck O2-Kanal sofort über den O2-Hochdruckbehälter, oder den O2-Reaktor, mit Druck beaufschlagt. Ähnlich wie bereits in der vorstehenden Verwendung, wird jede gezogene Maske über den druckbeaufschlagten Niederdruck 02-Kanal versorgt.

Schließlich eignet sich das System auch für die Verwendung als Chemisches Sauerstoffsystem mit mehreren chemischen O2-Reaktoren in nicht bestückten Maskenfächern - mit Verbindung zum druckbeaufschlagten 02-Kanal. Die Bestückung der Maskenfächer und das Öffnen der Klappen über einen zentralen Riegel erfolgen wie bei dem zuvor genannten Beispiel. Im Auslösefall wird der 02-Kanal sofort von den mit chemischen O2-Reaktoren bestückten Maskenfächern mit Druck versorgt, so dass jede Maske versorgt ist.

Im Rahmen der vorliegenden Erfindung umfasst der Begriff Luftfahrzeug nicht nur Flugzeuge, sondern beispielsweise auch Hubschrauber oder Luftfahrtschiffe, auch wenn sich die Erfindung insbesondere auf ein Verkehrflugzeug, insbesondere ein Passgierflugzeug bezieht.

### KURZE BESCHREIBUNG DER FIGUREN

Nachfolgend wird die Erfindung zur weiteren Erläuterung und zum besseren Verständnis anhand eines Ausführungsbeispiels unter Bezugnahme auf die beigefügten Zeichnungen näher erläutert. Es zeigen:
- Fig. 1: eine Innenraumperspektive einer Flugzeugkabine;
- Fig. 2: die Flugzeugkabine nach Fig. 1 mit herabhängenden gemäß der Erfindung;
- Fig. 3: eine perspektivische Ansicht eines im Übergangsbereich zwischen der Kabinenwand und einer Ablagevorrichtung angeordneten Sauerstoffversorgungssystems;
- Fig. 4: das Sauerstoffversorgungssystems nach Fig. 3 mit geöffneten Verschlussklappen;
- Fig. 5: das Sauerstoffversorgungssystem nach Fig. 3 und 4 mit herunter geschwenktem Gehäusestrang zum Umrüsten der Ablagevorrichtung;
- Fig. 6: einen Querschnitt durch das Sauerstoffversorgungssystem und die Ablagevorrichtung nach Fig. 3 bis 5;
- Fig. 7: das Sauerstoffversorgungssystem nach Fig. 6 mit geöffneten Verschlussklappen;
- Fig. 8: das Sauerstoffversorgungssystem nach Fig. 6 und 7 mit herunter geschwenktem Gehäusestrang zum Umrüsten der Ablagevorrichtung;
- Fig. 9: einen schematischen Schnitt durch eine Kabinenwand mit einer weiteren Ausführungsform des Sauerstoffversorgungssystems;
- Fig. 10: eine isometrische Ansicht schräg von unten eines Segments der Sauerstoffversorgung;
- Fig. 11: eine isometrische Ansicht schräg von oben des Segments nach Fig. 10;
- Fig. 12: einen Querschnitt durch ein beispielhaftes Profil der Sauerstoffversorgung; und
- Fig. 13: einen Querschnitt durch das Profil der Sauerstoffversorgung im Zusammenhang mit anschließender Kabinenraumverkleidung und Ablagevorrichtung.

### DETAILLIERTE BESCHREIBUNG BEVORZUGTER AUSFÜHRUNSBEISPIELE DER ERFINDUNG

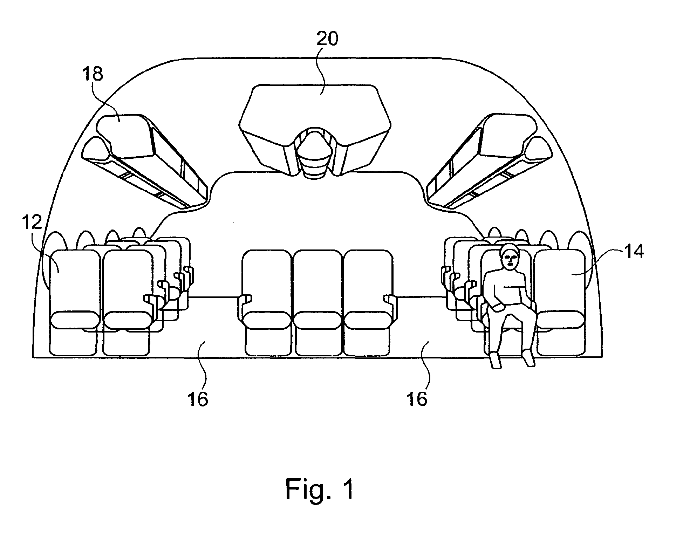

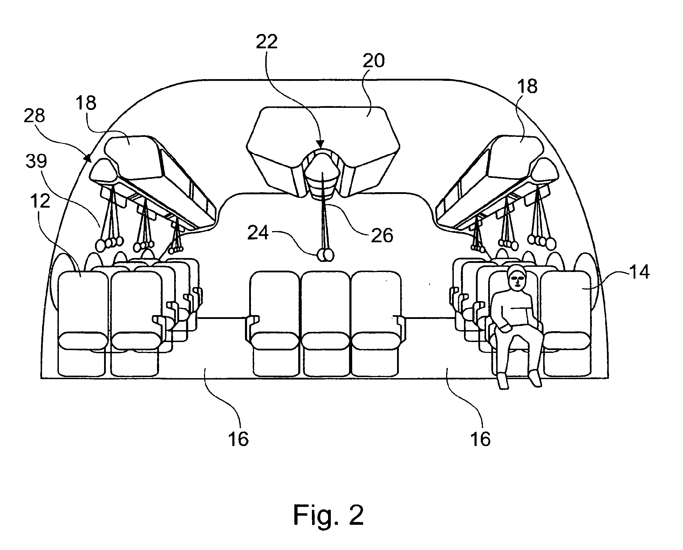

In Figur 1 und 2 ist eine Flugzeugkabine mit angedeuteter Bestuhlung dargestellt. Die gezeigte Bestuhlung sieht beispielsweise in einer Reihe jeweils zwei Sitzvorrichtungen 12 entlang der Kabinenaußenwand 14 und vier Sitzvorrichtungen 12 im mittleren Bereich vor, wobei die äußeren Bereiche von dem mittleren Bereich jeweils durch einen Gangbereich 16 getrennt sind. Von den Reihen sind nur die vorderen zwei mit der kompletten Zahl an Sitzvorrichtungen 12 gezeigt. Außerdem ist in den Figuren die linke Außenwand nicht dargestellt.

Oberhalb der Sitzvorrichtungen 12 befinden sich im Bereich der seitlichen Bestuhlungsbereiche Ablagefächer 18, so genannte Hatracks, deren seitlichen Klappen zum bessern Verständnis nicht dargestellt sind. Über dem mittleren Bestuhlungsbereich befindet sich eine mittige Ablagevorrichtung 20 für zum Beispiel das Handgepäck der Passagiere.

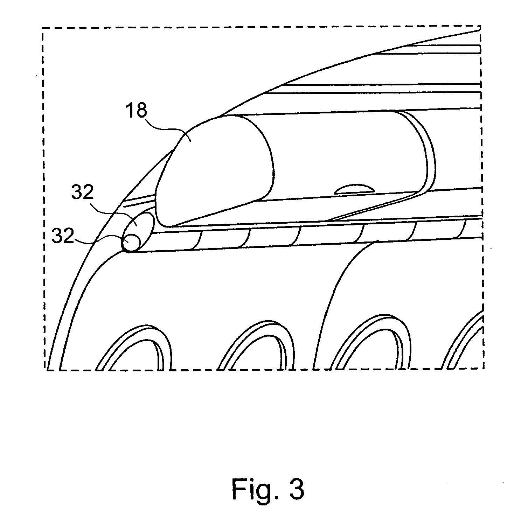

In Figur 2 ist im mittleren Bereich der mittigen Ablagevorrichtung 20 eine Sauerstoffversorgung 22 für die Personen in dem Luftfahrzeug angeordnet. Diese Sauerstoffversorgung 22 wird anhand der Figuren 3 bis 13 näher beschrieben. In Fig. 2 ist die Sauerstoffversorgung 22 in aktiviertem Zustand, d.h. in einer Notfall- oder Übungssituation, gezeigt, in welchem die Passagiere mit Sauerstoff versorgt werden müssen, z.B. bei Ausfall der Bedruckung der Kabine. Selbstverständlich eignet sich die Sauerstoffversorgung 22 auch für die Sauerstoffversorgung von Crewmitgliedern. In diesem Fall wird sie oberhalb der entsprechenden Sitzvorrichtungen der Crew angeordnet.

Zur Versorgung der Personen weist die Sauerstoffversorgung 22 Sauerstoffmasken 24 auf, die über einen Schlauch 26 mit einer in Fig. 2 nicht dargestellten Sauerstoffleitung verbunden sind und bei Bedarf an einer Zugleine 39 von oben herabhängen. In dieser Hängeposition sind die Sauerstoffmasken 24 von den Personen gut greifbar.

Die Sauerstoffversorgung 22 ist linear ausgebildet und verläuft in Längsrichtung des Flugzeugs. Die Sauerstoffmasken 24 sind linear angeordnet und in Längsrichtung voneinander beabstandet. Die Schläuche 26 eines Maskenfaches sind an einem gemeinsamen Fallpunkt (Aufhängepunkt) gehaltert, was dem derzeitigen Stand der Technik entspricht. Alternativ ist es auch möglich, die Schläuche 26 mit Abstand zueinander anzuordnen, um so ein Verschlingen oder Verdrillen derselben weitestgehend zu verhindern.

Auch oberhalb der äußeren beiden Sitzbereiche ist jeweils eine Sauerstoffversorgung 28 vorgesehen, die im wesentlichen der im mittleren Bereich vorgesehenen Sauerstoffversorgung 22 entspricht. Unterschiede ergeben sich lediglich aus den anderen Randbedingungen, d.h. Anschlussgeometrien, aufgrund der anders ausgebildeten Ablagevorrichtungen, und der geringeren Zahl der Sitzvorrichtungen.

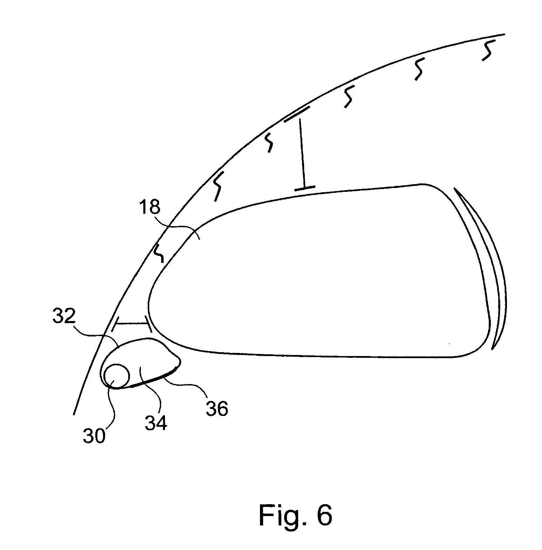

Im folgenden soll die Sauerstoffversorgung 28 der äußeren Sitzbereiche näher erläutert werden. Dazu ist in den Figuren 3 bis 5 eine perspektivische Schnittansicht mit der unmittelbaren Umgebung in einem Ausschnitt gezeigt. Parallel dazu ist in den Figuren 6 bis 8 jeweils ein Schnitt dargestellt.

Die Sauerstoffversorgung 28 weist eine Sauerstoffleitung 30 auf, die an eine nicht gezeigte Sauerstoffzuführung angeschlossen ist und sich in Längsrichtung des Flugzeugs erstreckt. Zum Anschluss der Sauerstoffmasken 24 mittels der Schläuche 26 sind nicht dargestellte Anschlussstellen vorgesehen, die linear angeordnet und in Längsrichtung voneinander beabstandet sind. Vorzugsweise sind die Anschlussstellen in Längsrichtung hintereinander angeordnet. Die Anschlussstellen sind mit der Sauerstoffleitung 30 verbunden. Weiter ist vorgesehen, dass die Anschlussstellen so ausgebildet sind, dass sich die Sauerstoffmasken 24 lösbar mit der Sauerstoffleitung 30 verbinden lassen.

Die Zahl der Anschlussstellen und deren Abstand definiert sich durch die einschlägigen Sicherheitsvorschriften. Diese sehen vor, dass für jeden Passagier an Bord eine Sauerstoffmaske 24 vorgesehen sein muss, zuzüglich einer Reserve von mindestens 10%, da sich ein Ausfall der Masken nie ganz vermeiden lässt. Die Zahl der Passagiere bestimmt sich durch die Zahl der vorgesehenen Sitzvorrichtungen.

Die Anordnung der Sitzvorrichtungen ist heutzutage jedoch flexibel ausgelegt, so dass sich innerhalb eines gegebenen Kabinenlayouts unterschiedliche Bestuhlungsvarianten realisieren lassen. Die Anordnung der Sitzvorrichtungen variiert dabei nicht nur in dem Abstand der Reihen untereinander, sondern auch in dem Abstand in Querrichtung, d.h. in der Anzahl der Sitze pro Reihe. Eine Änderung der Sitzanordnung kann sich beispielsweise ergeben, wenn die Bestuhlung und die Inneneinrichtung erneuert wird, wobei dann oftmals auch die Ablagevorrichtungen erneuert werden. Eine Änderung der Sitzanordnung kann aber auch aus ökonomischen Gründen erforderlich sein, wenn lediglich die Passagierzahl erhöht oder verringert werden soll. Dabei werden die vorhandenen Sitze einfach dichter zusammen geschoben oder voneinander weg geschoben.

Auch bei einer veränderten Sitzanordnung muss jedoch eine ausreichende Sauerstoffversorgung gewährleistet sein. Bei bekannten Sauerstoffversorgungen muss bei einer Umrüstung der Sitze auch die Sauerstoffversorgung umgerüstet werden. Da es sich bei der Sauerstoffversorgung um ein sicherheitsrelevantes Bauteil handelt, das speziellen Vorschriften unterliegt, ist dann zusätzlich noch ein erneutes Testverfahren erforderlich.

Gemäß der vorliegenden Erfindung wird eine Sauerstoffversorgung zur Verfügung gestellt, die es erlaubt, die Anordnung der Sitzvorrichtungen 12 zu ändern, ohne dass das Sauerstoffsystem in seinen fest installierten Komponenten geändert werden muss. Das System der vorliegenden Erfindung sieht dazu vor, die Zahl der Anschlussstellen auf ein Maximum der Bestuhlung auszulegen, plus der erforderlichen Reserve. Bei einer Verringerung der Sitze muss das System nicht geändert werden, da kein direkter geometrischer Zusammenhang zwischen der Sauerstoffversorgung und der Sitzanordnung besteht. Die längsgerichtete Sauerstoffleitung ermöglicht eine flächendeckende Versorgung. Bei entsprechender Breite und bei vorhandenen Gangbereichen sind natürlich mehrere längsgerichtete Sauerstoffleitungen, durchaus auch mehrere Sauerstoffleitungen pro Sitzbereichszone, erforderlich, um den problemlosen Zugriff für alle Passagiere zu gewährleisten.

Erfindungsgemäß wird ein System geschaffen, das eine Redundanz in der Zahl der Anschlussstellen und eventuell auch der Masken vorsieht. Bei geringerer Bestuhlung können die Masken auch einfach entkoppelt und separat gelagert werden. Bei Bedarf werden dann wieder mehr Masken an dem Anschlussstellen angeschlossen. Da die Leitung selbst nicht verändert werden muss, ist auch kein Test erforderlich.

Das Vorsehen der maximalen Zahl an Anschlussstellen bedeutet zwar einen Mehraufwand bei der Herstellung und Montage und einen geringes Maß an zusätzlichem Gewicht. Der Mehraufwand ist jedoch ins Verhältnis zu setzen mit dem Aufwand, der üblicherweise erforderlich ist, wenn im Rahmen einer Änderung der Sitzanordnung auch eine Anpassung der Sauerstoffversorgung erforderlich ist. Auch hinsichtlich des Gewichts stellt das erfindungsgemäße System im Vergleich zu der üblichen Anordnung mit Querverteilungsleitungen eine Verbesserung dar. Der Mehraufwand für die maximale Zahl der Masken ist vergleichsweise gering, wenn dadurch keine Anpassung des Systems mehr erforderlich ist. Das erfindungsgemäße System ist grundsätzlich in der Lage, bei einer Änderung der Sitzanordnung die geforderte Sicherheit zu gewährleisten, ohne dass es einer Änderung bedarf.

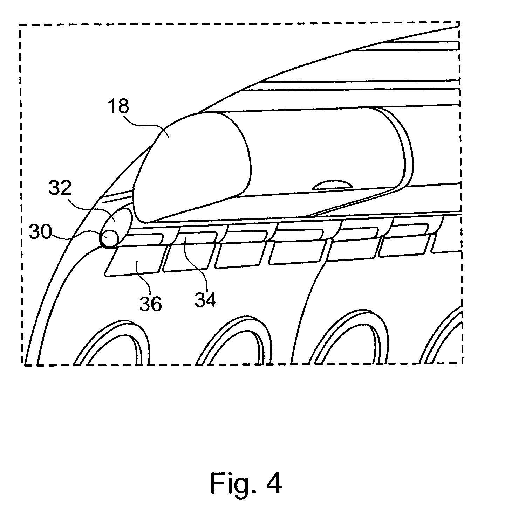

In dem in den Figuren 3 bis 8 gezeigten Ausführungsbeispiel ist die Sauerstoffleitung 30 in einem Gehäuse 32 angeordnet, das über Befestigungsvorrichtungen mit tragenden Teilen der Flugzeugstruktur verbunden ist. Dazu kann das Gehäuse aus mehreren Stücken bestehen, die beispielsweise jeweils über eine Länge von 4 Spanten des Flugzeugrumpfs eingebaut sein. Das Gehäuse 32 weist mehrere Aufnahmefächer 34 für jeweils mehrere Sauerstoffmasken 24 auf. Die Aufnahmefächer 34 weisen jeweils eine Verschlussklappe 36 auf, die derart öffenbar ist, dass das Aufnahmefach 34 in geöffnetem Zustand nach unten offen ist, wie dies in Figur 4 gezeigt ist, und die darin aufgenommenen Sauerstoffmasken 24 herausfallen können. Beispielsweise weist in Figur 4 ein über vier Spanten reichendes Gehäusestück 6 Klappen 32 à 14 Zoll (inches) zur Aufnahme von jeweils vier Masken 24 auf. Die Steuerung der Öffnung der Verschlussklappen 36 erfolgt zentral.

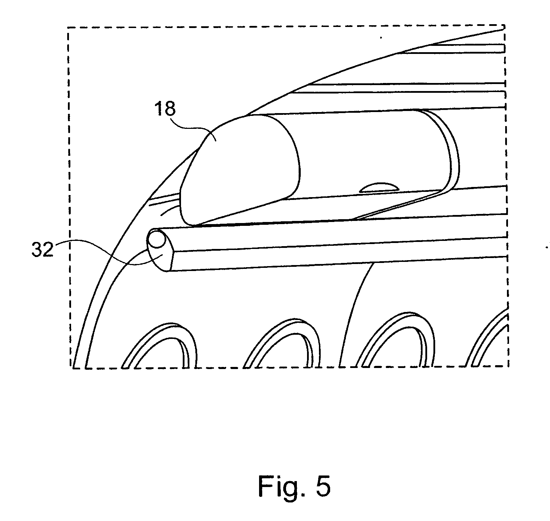

Das Gehäuse 32 ist in dem gezeigten Ausführungsbeispiel außerdem so an der tragenden Struktur befestigt, dass es sich nach unten weg schwenken lässt (siehe Figur 5), um die Ablagefächer 18 unabhängig von der Sauerstoffversorgung 28 ausbauen zu können.

In einem anderen Ausführungsbeispiel sind die Sauerstoffleitung und die Anschlussstellen für die Sauerstoffmasken in die Konstruktion der Ablagefächer integriert. Dadurch lassen sich weitere Einsparungen bei der Herstellung, des Gewichts und der Montage erreichen.

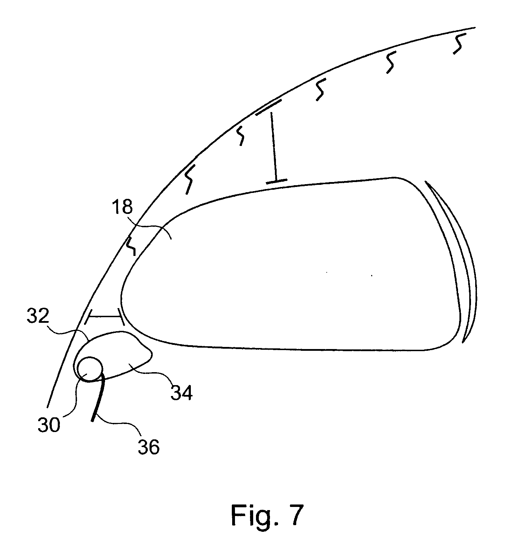

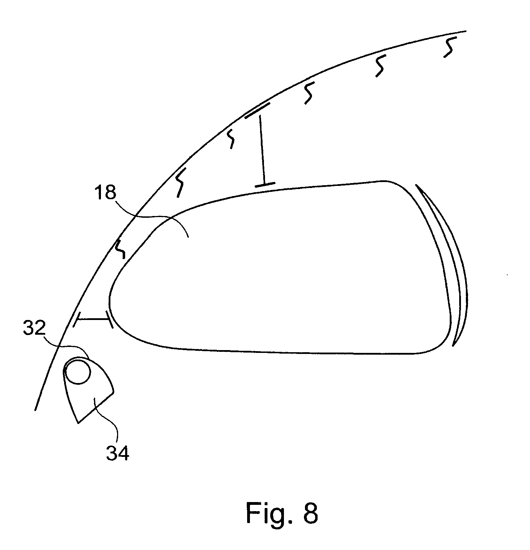

In den Figuren 6 bis 8 ist deutlich zu sehen, dass die Sauerstoffversorgung gemäß den Figuren 3 bis 5 zwar optisch in die Einbauten der Kabine mit einbezogen werden kann, jedoch konstruktiv unabhängig von der Ablagevorrichtung ist. Figur 6 zeigt das Gehäuse 32 in Normalstellung mit geschlossenen Verschlussklappen 36. In Figur 7 ist die bereits angesprochene Notfall-Situation dargestellt, bei der die Klappen 36 nach unten geöffnet sind und die nicht dargestellten Masken 24 nach unten heraus hängen. In Figur 8 ist dargestellt, dass das Gehäuse 32 nach unten verschwenkt werden kann, um an die Befestigungspunkte der Ablagevorrichtung 18 zu gelangen. Aufgrund der Anordnung im Bereich des Übergangs von der Kabinenwand in die Ablagevorrichtung 18 lässt sich die erfindungsgemäße Sauerstoffversorgung sehr gut in verschiedene Kabinenlayouts integrieren. Die Anordnung im Fugen/Übergangsbereich bedeutet darüberhinaus auch, dass an diesen Stellen mit anderen Toleranzen gearbeitet werden kann, da der Übergang durch das Gehäuse 32 optisch verdeckt ist.

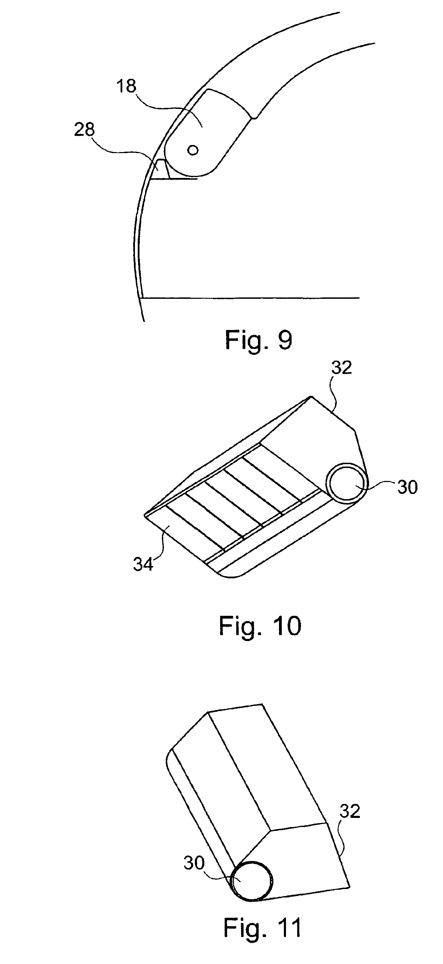

In Figur 9 ist in einem weiteren Ausführungsbeispiel gezeigt, dass das Gehäuse 32 auch so trapezförmig ausgebildet sein kann, dass die Sauerstoffleitung 30 oben verläuft und die Aufnahmefächer 34 nach unten weisend darunter angeordnet sind. Weiter ist in Figur 10 eine isometrische Darstellung eines Segments des Gehäuses 32 gezeigt. Neben der Anordnung von mehreren Masken 24 in einem Aufnahmefach 34 können auch einzelne Fächer 34 für einzelne Masken 24 ausgebildet sein, wobei mehrere Fächer 34 mt einer gemeinsamen Verschlussklappe 36 verschlossen werden. Figur 11 zeigt das Gehäusesegment in einer Ansicht von schräg oben.

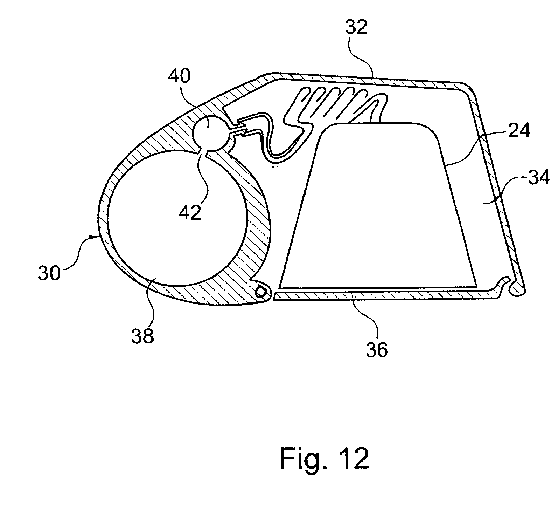

Figur 12 zeigt eine beispielhafte Ausführungsform des Gehäuses 32 im Schnitt. Die Sauerstoffleitung 30 weist hier einen druckbeaufschlagten Hochdruckkanal 38 und einen Niederdruckkanal 40 auf. Der Hochdruckkanal 38 und der Niederdruckkanal 40 sind einstückig mit dem Gehäuse 32 hergestellt worden, beispielsweise durch Strangpressverfahren. Der Niederdruckkanal 40 ist über Verbindungsöffnungen 42 mit dem Hochdruckkanal 38 verbunden. Die Anschlussstellen der Masken 24 sind direkt an dem Niederdruckkanal 40 vorgesehen, wobei hier eventuell notwendige Ventile integriert ausgebildet sein können. Die Verbindungsöffnungen 42 reduzieren den Druck des Hochdruckkanals 38 auf ein für die Masken 24 und die Anschlussstellen geeignetes Maß. Der Hochdruckkanal 38 ist so dimensioniert, dass er auch zur Aufnahme von Sauerstoffflaschen oder chemischen Systemen, bzw. den Containern der chemischen Systeme, dienen kann. Dabei können mehrere kleinere Systeme, wenige größere Systeme oder sogar nur ein einzelnes großes System zur Anwendung kommen.

Durch eine segmentierte Ausbildung des Hochdruckkanal 38 und durch sequentielle Verbindung des Niederdruckkanals 40 kann eine bessere Verteilung und Sicherheit bei Ausfall einzelner Segmente erreicht werden. Die Ausbildung mit mehreren Verbindungsöffnungen zwischen dem Hochdruckkanal 38 und dem Niederdruckkanal 40 erlaubt zudem eine präzise Regulierung des Druckabfalls, bzw. eine Druckdämpfung, so dass überall gleich viel Sauerstoff zur Verfügung steht.

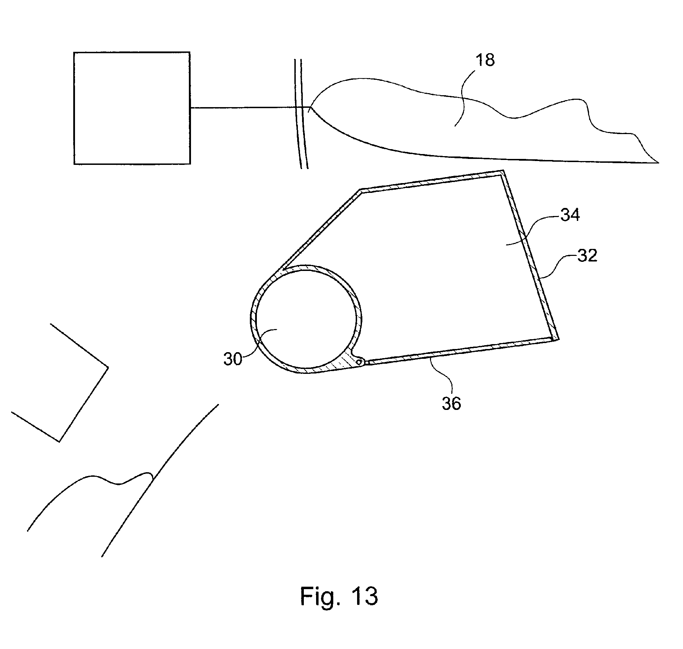

Schließlich ist das Gehäuse 32 aus Figur 12 in Figur 13 im Zusammenhang mit den umgebenden Einbauten und der tragenden Flugzeugstruktur gezeigt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. System zur Swerstoffversorgung von Personen in einem Luftfahrzeug mit wenigstens einer Sauerstoffleitung (30), einer Sauerstoffzuführung und mehreren Anschlussstellen für Sauerstoffmasken (24), wobei sich die Sauerstoffleitung (30) in einer Längsrichtung des Luftfahrzeugs erstreckt und die Anschlussstellen mit der Sauerstoffleitung (30) verbunden sind **dadurch gekennzeichnet, dass** die Anschlussstellen für die Sauerstoffmasken linear und in Längsrichtung voneinander beabstandet und hintereinander angeordnet sind; und wobei die Anschlussstellen für die Sauerstoffmasken direkt an der Sauerstoffleitung angeordnet sind.

2. System nach Anspruch 1,
**dadurch gekennzeichnet, dass** an einer Vielzahl der Anschlussstellen Sauerstoffmasken (24) lösbar mit der Sauerstoffteitung (30) verbunden sind.

3. System nach einem der Ansprüche 1 oder 2,
**dadurch gekennzeichnet, dass** ein Gehäuse (32) vorgesehen ist, das mehrere Aufnahmefächer (34) für jeweils mehrere Sauerstoffmasken (24) aufweist, und die Aufnahmefächer (34) jeweils eine Verschlussklappe (36) aufweisen, die derart offenbar ist, dass das Aufnahmefach (34) in geöffnetem Zustand nach unten offen ist und die darin aufnehmbaren Sauerstoffmasken (24) herausfallen können.

4. System nach einem der Ansprüche 1 bis 3,
**dadurch gekennzeichnet, dass** die Sauerstoffleitung (30) einen druckbeaufschlagten Hochdruckkanal (3 8) und einen Niederdruckkanal (40) ausweist.

5. System nach Anspruch 4,
**dadurch gekennzeichnet, dass** der Niederdruckkanal (40) segmentiert ausgebildet ist und mit dem Hochdruckkanal (38) sequentiell verbunden ist und die Anschlußstellen für die Sauerstoffmasken (24) an dem Niederdruckkanal (40) vorgesehen sind.

6. System nach Anspruch 4 oder 5,
**dadurch gekennzeichnet, dass** wenigstens eine Sauerstoffquelle in dem Hochdruckkanal (38) angeordnet ist.

7. System nach einem der Ansprüche 4 bis 6,
**dadurch gekennzeichnet, dass** der Hochdruckkanal (38) und der Niederdruckkanal (40) in das Gehäuse (32) integriert sind und das Gehäuse (32) Befestigungsvorrichtungen zur Montage an tragenden Elementen des Luftfahrzeugs aufweist.

8. System nach einem der Ansprüche 1 bis 7,
**dadurch gekennzeichnet, dass** in einem Luftfahrzeug wenigstens eine Sauerstoffleitung (30) in Längsrichtung des Luftfahrzeugs verlaufen kann, wobei die Sauerstoffleitung (30) oberhalb von Sitzvorrichtungen (12) für Passagiere oder Crewmitglieder angeordnet werden kann.

9. System nach Anspruch 8,
**dadurch gekennzeichnet, dass** das Luftfahrzeug eine Anzahl von Bestuhlungsbereichen aufweist, die durch in Längsrichtung verlaufende Gangbereiche voneinander getrennt sind, und über jedem Bestuhlungsbereich wenigstens eine in Längsrichtung verlaufende Sauerstoffleitung (30) angeordnet werden kann.

10. System nach Anspruch 8 oder 9,
**dadurch gekennzeichnet, dass** mehr Anschlussstellen voroehbar sind als die maximale Zahl der Sitzvorrichtungen (12) und die Anschlussstellen so voneinander beabstandet werden können , dass bei beliebiger Bestuhlung jeder Sitzvorrichtung (12) die behördlich geforderte Maskenzahl zuordenbar ist.

11. System nach einem der Ansprüche 8 bis 10,
**dadurch gekennzeichnet, dass** oberhalb der Sitzvorrichtungen (12) Einbauten (18, 20) angeordnet sind und die wenigstens eine Sauerstoffleitung (30) und die mehreren Anschlussstellen für die Sauerstoffmasken (24) in die Einbauten (18, 20) integriert werden können .

12. System nach einem der Ansprüche 8 bis 11,
**dadurch gekennzeichnet, dass** die Anschlussstellen mit Sauerstoffmasken (24) in Abhängigkeit der Bestuhlung mit einer festgelegten Überkapazität bestückbar sind.

13. Luftfahrzeug mit einem System zur Sauerstoffversorgung nach einem der Ansprüche 1 bis 12.

14. Verwendung eines Systems zur Sauerstoffversorgung nach einem der Ansprüche 1 bis 12 in einem Luftfahrzeug.

## Claims

1. A system for the oxygen supply of persons in an aircraft, having at least one oxygen line (30), one oxygen feed, and multiple attachment points for oxygen masks (24), the oxygen line (30) extending in a longitudinal direction of the aircraft and the attachment points being connected to the oxygen line (30), **characterised in that** the attachment points for the oxygen masks are arranged in linear manner, spaced apart from one another and behind one another in the longitudinal direction, the attachment points for the oxygen masks being arranged directly on the oxygen line.

2. The system according to claim 1, **characterised in that** oxygen masks (24) are connected detachably to the oxygen line (30) at a plurality of the attachment points.

3. The system according to one of claims 1 or 2, **characterised in that** a housing (32) is provided, which comprises multiple receptacle compartments (34) each for multiple oxygen masks (24), and the receptacle compartments (34) each comprise a closure flap (36), which may be opened in such a way that the receptacle compartment (34) is open at the bottom in an open state and the oxygen masks (24) which may be accommodated therein may fall out.

4. The system according to one of claims 1 to 3, **characterised in that** the oxygen line (30) has a pressurised high pressure duct (38) and a low pressure duct (40).

5. The system according to claim 4, **characterised in that** the low pressure duct (40) is of segmented construction and is sequentially connected to the high pressure duct (3 8), and the attachment points for the oxygen masks (24) are provided on the low pressure duct (40).

6. The system according to claim 4 or claim 5, **characterised in that** at least one oxygen source is arranged in the high pressure duct (38).

7. The system according to one of claims 4 to 6, **characterised in that** the high pressure duct (38) and the low pressure duct (40) are integrated into the housing (32) and the housing (32) has fastening devices for installation on structural elements of the aircraft.

8. The system according to one of claims 1 to 7, **characterised in that**, in an aircraft, at least one oxygen line (30) may extend in the longitudinal direction of the aircraft, wherein the oxygen line (30) may be arranged above seat devices (12) for passengers or crew members.

9. The system according to claim 8, **characterised in that** the aircraft has a number of seating areas, which are separated from one another by aisle areas extending in the longitudinal direction, and at least one oxygen line (30) extending in the longitudinal direction may be arranged over each seating area.

10. The system according to claim 8 or claim 9, **characterised in that** more attachment points may be provided than the maximum number of seat devices (12), and the attachment points may be spaced apart from one another in such a way that, with any desired seating, the officially required number of masks may be assigned to each seat device (12).

11. The system according to one of claims 8 to 10, **characterised in that** fixtures (18, 20) are arranged above the seat devices (12), and the at least one oxygen line (30) and the multiple attachment points for the oxygen masks (24) may be integrated into the fixtures (18, 20).

12. The system according to one of claims 8 to 11, **characterised in that**, depending on the seating, the attachment points may be equipped with oxygen masks (24) with a specified excess capacity,

13. An aircraft having a system for oxygen supply according to one of claims 1 to 12.

14. Use of a System for oxygen supply according to one of claims 1 to 12 in an aircraft.

## Revendications

1. Système pour alimenter en oxygène des passagers d'un avion doté d'au moins une canalisation d'oxygène (30), d'une alimentation en oxygène et de plusieurs points de raccordement pour des masques à oxygène (24), la canalisation d'oxygène (30) s'étendant dans une direction longitudinale de l'avion et les points de raccordement étant reliés avec ladite canalisation d'oxygène (30), **caractérisé par le fait que** les points de raccordement pour les masques à oxygène sont disposés de manière linéaire et espacés les uns des autres dans la direction longitudinale les uns derrière les autres ; et les points de raccordement pour les masques à oxygène étant disposés directement au niveau de la canalisation d'oxygène.

2. Système selon la revendication 1, **caractérisé par le fait qu'**au niveau d'une multitude de points de raccordement des masques à oxygène (24) sont reliés de manière amovible avec la canalisation d'oxygène (30).

3. Système selon une des revendications 1 ou 2, **caractérisé par le fait qu'**un boîtier (32) est prévu, qui présente plusieurs casiers de logement (34) destinés chacun à plusieurs masques à oxygène (24), et que les casiers de logement (34) présentent chacun un clapet de fermeture (36), pouvant être ouvert de telle sorte que le casier de logement (34) est ouvert vers le bas à l'état ouvert et que les masques à oxygène (24) qu'ils peuvent loger peuvent en tomber.

4. Système selon une des revendications 1 à 3, **caractérisé par le fait que** la canalisation d'oxygène (30) présente un canal haute pression (38) sollicité en pression et un canal basse pression (40).

5. Système selon la revendication 4, **caractérisé par le fait que** le canal basse pression (40) est formé de manière segmentée et est relié de manière séquentielle avec le canal haute pression (38) et les points de raccordement pour les masques à oxygène (24) sont prévus au niveau du canal basse pression (40).

6. Système selon la revendication 4 ou 5, **caractérisé par le fait qu'**au moins une source d'oxygène est disposée dans le canal haute pression (38).

7. Système selon une des revendications 4 à 6, **caractérisé par le fait que** le canal haute pression (38) et le canal basse pression (40) sont intégrés dans le boîtier (32) et le boîtier (32) présente des dispositifs de fixation destinés au montage sur des éléments portants de l'avion.

8. Système selon une des revendications 1 à 7, **caractérisé par le fait que** dans un avion au moins une canalisation d'oxygène (30) peut s'étendre dans la direction longitudinale de l'avion, la canalisation d'oxygène (30) peut être disposée au-dessus de dispositifs de sièges (12) pour les passagers ou les membres d'équipage.

9. Système selon la revendication 8, **caractérisé par le fait que** l'avion présente un nombre de zones d'agencement de sièges, qui sont séparées entre elles par des couloirs s'étendant dans la direction longitudinale, et au moins une canalisation d'oxygène (30) s'étendant dans la direction longitudinale peut être disposée sur chaque zone d'agencement de sièges.

10. Système selon la revendication 8 ou 9, **caractérisé par le fait qu'**il peut être prévu plus de points de raccordement que le nombre maximum de dispositifs de sièges (12) et les points de raccordement peuvent être espacés les uns des autres de telle sorte que pour tout agencement des sièges le nombre de masques requis par les autorités peut être attribué à chaque dispositif de sièges (12).

11. Système selon une des revendications 8 à 10, **caractérisé par le fait que** des éléments intégrés (18, 20) sont disposés au-dessus des dispositifs de sièges (12) et au moins une canalisation d'oxygène (30) et plusieurs points de raccordement pour les masques à oxygène (24) peuvent être incorporés a les éléments intégrés (18, 20).

12. Système selon une des revendications à 11, **caractérisé par le fait que** les points de raccordement sont équipés de masques à oxygène (24) avec une surcapacité définie en fonction de l'agencement des sièges.

13. Avion doté d'un d'alimentation en oxygène selon une des revendications 1 à 12.

14. Utilisation d'un système d'alimentation en selon une des revendications 1 à 12 dans un avion.
